# EUROPEAN PATENT SPECIFICATION

(11) **EP 2 351 622 B1**
(45) Date of publication and mention of the grant of the patent: **04.06.2014**
(21) Application number: 09824452.8
(22) Date of filing: 06.11.2009
(51) Int. Cl.: B21D 17/04, F16L 55/10, B21D 39/04

(54) **METHOD FOR MANUFACTURING SEALED METAL TUBES AND SEALED METAL TUBE MANUFACTURED WITH SAID METHOD**
VERFAHREN ZUR HERSTELLUNG ABGEDICHTETER METALLRÖHREN UND IN DIESEM VERFAHREN HERSTELLTE ABGEDICHTETE METALLRÖHRE
PROCÉDÉ DE FABRICATION DE TUBES MÉTALLIQUES ÉTANCHES ET TUBE MÉTALLIQUE ÉTANCHE FABRIQUÉ AU MOYEN DUDIT PROCÉDÉ

(30) Priority: 07.11.2008 ES 200803188
(43) Date of publication of application: 03.08.2011
(73) Proprietor: Nemesio Zubia, S. A., 20570 Oñate (Guipúzcoa) (ES)
(72) Inventor: URRUCHUA ULACIA, Daniel, E-20570 Oñate (Guipúzcoa) (ES)
(74) Representative: Pons Ariño, Angel
(86) International application number: PCT/ES2009/070484
(87) International publication number: WO 2010/052358

(56) References cited:
- EP-A1- 1 298 314
- EP-A1- 1 298 314
- ES-A1- 8 204 318
- GB-A- 2 034 618
- JP-A- 9 042 578
- JP-A- 2006 300 153
- US-A1- 2008 231 001
- US-A1- 2008 231 001
- US-B1- 6 338 363
- US-B1- 6 338 363
- US-B1- 7 111 645

## Description

### TECHNICAL FIELD OF THE INVENTION

The present invention relates to the technical field of moulding processes for parts, specifically metallic parts, more specifically to moulding by means of rotating processes and more specifically to inlay grooving processes, applied in this case to the manufacture of watertight metallic pipes.

### BACKGROUND OF THE INVENTION

At present, most watertight metallic pipe manufacturing processes involve disposing watertightness means by gluing or welding, said means being completely efficient when disposed at the ends of the pipe. On the contrary, when watertightness in an intermediate area of the pipe is required, between both ends, said fixation of the watertightness means becomes highly complex and expensive, with the added problem of possible pipe watertightness failures. Document EP 1298314 shows a method for manufacturing watertight metallic pipes in an intermediate area of the pipe.

An alternative solution for fixing the watertightness means consists of microwelding these to the pipe, although this is a complex and very expensive task. Therefore, an automatic and efficient method for manufacturing watertight pipes was required, avoiding the drawbacks of the earlier systems of the state of the art.

### DESCRIPTION OF THE INVENTION

The present invention solves the current problems of the state of the art by using a method for manufacturing watertight metallic pipes, according to claim 1.

Another object of the present invention is the watertight pipe obtained using the previously described method, according to claim 6.

### DESCRIPTION OF THE FIGURES

In order to better understand the invention, an embodiment of the invention which makes reference to a set of figures is described below in an illustrative and non-limiting manner.
Figure 1 shows an elevational view of a grooving machine for the method for manufacturing watertight pipes, with a pipe disposed therein and the grooving positioned in the pipe.
Figure 2 shows an enlarged view of the area wherein the grooving tool is disposed and a particular embodiment of the watertightness means disposed in the interior of the pipe.
Figure 3 shows an elevational view of the pipe and of a preferred embodiment of the watertightness means to be introduced therein.
Figure 4 shows different views of the watertight pipe obtained using the manufacturing method that is the object of the invention.
Figure 4a shows a perspective view of the watertight pipe and figure 4b shows an elevational view of said watertight pipe.

In said figures, reference is made to the following set of elements:
1. Metallic pipe
2. First end of the metallic pipe
3. Second end of the metallic pipe
4. Grooving machine
5. Grooving machine rotor
6. Grooving machine support system
7. Grooving machine grooving tool
8. Watertightness means
9. Desired sealing position
10. Groove made in the pipe by the grooving pipe
11. O-rings.

### DESCRIPTION OF PREFERRED EMBODIMENTS OF THE INVENTION

The method for manufacturing watertight metallic pipes that is the object of the present invention is composed of different stages.

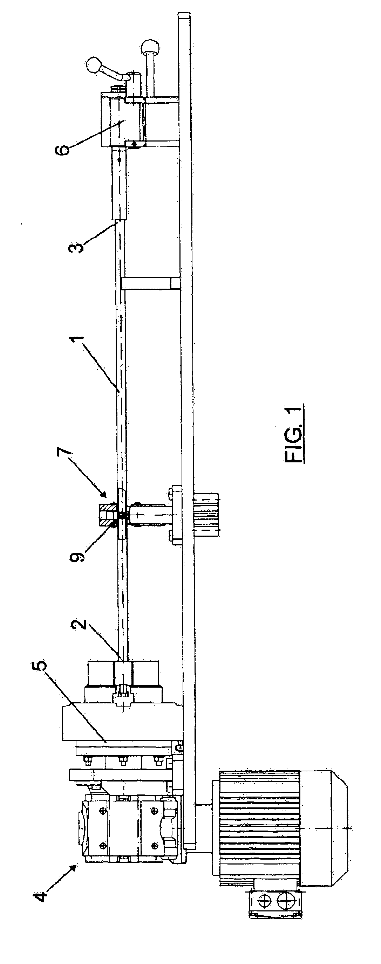

Firstly, a cylindrical metallic pipe 1 is placed in a four-pipe grooving machine. Figure 1 shows a four-pipe grooving machine wherein a metallic pipe 1 is disposed for manufacturing the watertight pipe.

In order to position the pipe 1 in the grooved machine 4, a first end 2 thereof is positioned in a rotor 5 of the grooving machine 4 and a second end 3 is positioned in a support system 6 of the grooving machine 4. The rotor 5 makes the pipe 1 rotate at great speed and the support system 6 is in charge of supporting the second end 3, allowing the pipe 1 to rotate. A rotating grooving tool 7 is positioned outside the pipe 1 in a desired sealing position 9 wherein the watertightness means 8 will be disposed.

Once the pipe 1 is disposed in the grooving machine 4, the watertightness means 8 are introduced into the interior of the pipe 1 and positioned in the desired sealing position 9.

Once the watertightness means 8 are introduced and positioned in the desired point in the interior of the pipe 1, the rotor 5 of the grooving machine 4 is actuated, making the pipe 1 rotate at great speed, and the grooving tool 7 is actuated against the outer surface of the pipe 1 at the desired point of fixation of the watertightness means 8.

By means of the rotating movement of the grooving tool 7 and the pressure exerted against the outer surface of the pipe 1, together with the rotation of the pipe 1 actuated by the rotor 1, the grooving tool 7 makes a groove 10 in the sealing position 9 which reduces the diameter of the pipe 1 in that area, whereupon the watertightness means 8 are fixed to the inner surface of the pipe 1 by means of pressure, thereby sealing the pipe 1 in a watertight manner.

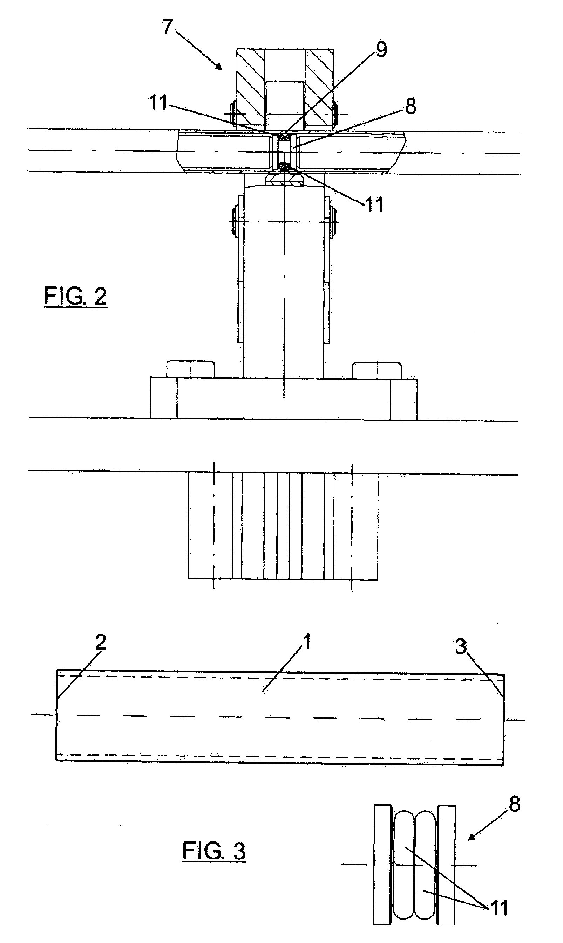

Figure 1 and particularly figure 2 show the area of the desired position of the pipe 1 seal 9, together with the grooving tool 7 positioned in that area, and the watertightness means 8 introduced into the interior of the pipe 1.

As can be observed in Figure 2, the grooving tool 7 comprises a cylindrical tool that rotates around an axle, with a projection in its central part which exerts pressure against the pipe 1 and perfoms the groove 10, as well as narrowing the diameter of the pipe 1 that fixes the watertightness means 8 in the interior thereof.

In order to carry out this operation in an efficient manner, the rotor will preferably provide a rotation speed in the range of 1400 rpm and 192 rpm.

Additionally, the grooving machine 4 has a speed variator for controlling rotor 5 rotation speed.

According to a particular embodiment of the manufacturing method, a stud is used during the introduction and positioning stage of the watertightness means 8 in the interior of the pipe 1, which is introduced into one of the ends 2,3 of the pipe 1, pushing the watertightness means 8 to the desired position. Preferably, two studs are used. One of these is introduced into the interior of the pipe 1 by one of its ends 2,3 until reaching the desired sealing position 9, where they are positioned and fixed between the two studs, in an accurate and secure manner during the watertight pipe manufacturing process.

The other object of the present invention is the watertight pipe obtained using the described method, which is formed from a cylindrical metallic pipe 1 having watertightness means 8 fixed to the interior thereof in a desired sealing position 9. In this position 9, the pipe 1 will have a groove 10 on its outer face which reduces the diameter of said pipe 1 and which enables the watertightness means 8 to become fixed to the interior of the pipe 1 by means of pressure in that area, thereby sealing said pipe 1 in a watertight manner.

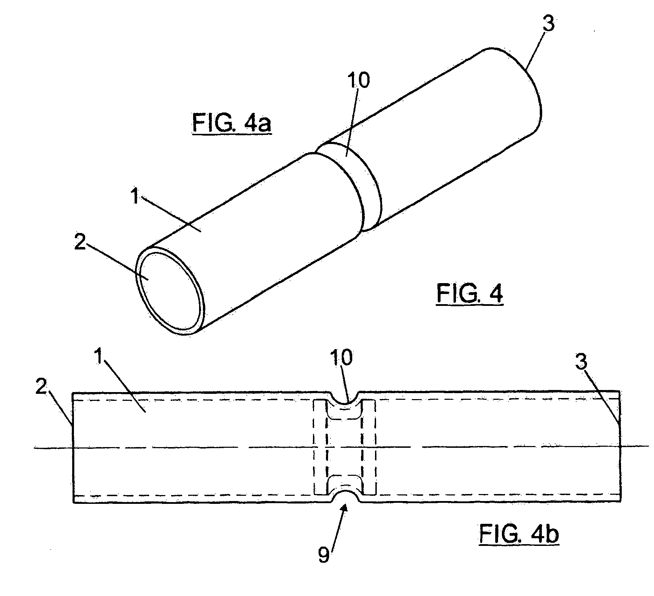

As can be observed in figure 2, and particularly in figure 3, the watertightness means 8 are preferably a cylindrical bushing 8 having a diameter practically identical to that of the pipe 1, although slightly smaller, for easy introduction into the interior thereof, which is introduced into the interior of pipe 1 with its axis parallel to that of said pipe 1. Additionally, the bushing 8 comprises a recess in its central part wherein at least one O-ring 11 is disposed, which presses against the groove 10 made in the pipe 1 in order to achieve the watertight seal. Preferably, two O-rings 11 will be disposed in contact with each other, in such a manner that the groove 10 is made in the pipe 1 in the central position of both O-rings 11. Figure 4 shows the result of the watertight pipe obtained, wherein the groove that presses against the bushing 8 and thereby achieves the watertight seal, can be seen.

The materials used for the pipe 1 and the bushing 8 include almost any metal element such as iron, aluminium, stainless steel, copper, brass, etc., preferably using the same metallic material for the pipe 1 and bushing 8.

With regard to the O-rings, almost any elastomer may be used, preferably gum or rubber, that will provide a perfect watertight seal.

Having clearly described the invention, it must be pointed out that the previously described particular embodiments are susceptible to detailed modifications, without departing from the scope of the appended claims.

## Claims

1. A method for manufacturing watertight metallic pipes, **characterised in that** it comprises the stages of:
- placing a cylindrical metallic pipe (1) in a pipe grooving machine (4),
- positioning a first end (2) of the pipe (1) on a rotor (5) of the grooving machine (4), which makes said pipe (1) rotate;
- positioning a second end (3) of the pipe (1) in a support system (6) of the grooving machine (4) which supports said second end (3), thereby allowing the pipe (1) to rotate, and
- positioning a rotating grooving tool (7) in a desired sealing position (9) in the exterior of an intermediate area of the pipe (1) between the first (2) and second end (3) thereof, **characterised by** the stages of :
- introducing and positioning revolving watertightness means (8) comprising a cylindrical bushing with a recess in its central area, wherein at least one O-ring (11) is disposed, in the interior of the pipe (1) in the desired sealing position (9) of the intermediate area of the pipe (1),
- actuating the rotor (5) of the grooving machine (4) which makes the pipe (1) rotate, and
- actuating the grooving tool (7) against the outer surface of the pipe (1) which, by means of its rotating movement and the pressure exerted against said outer surface and the rotation of the pipe (1), makes a groove (10) which reduces the diameter of the pipe (1) in the sealing position (9) which corresponds with the place where the recess of the cylindrical bushing is located, said watertightness means (8) being fixed to the inner surface of the pipe (1) by means of pressure, whereupon said pipe (1) is sealed in a watertight manner.

2. A method for manufacturing watertight metallic pipes, according to claim 1, **characterised in that** the introduction and positioning of the watertightness means (8) in the interior of the pipe (1) in the desired sealing position (9) is carried out by introducing at least one stud in the interior of the pipe (1) into one of its ends (2,3), which pushes said watertightness means (8) to the desired sealing position (9).

3. A method for manufacturing watertight metallic pipes, according to the preceding claim, **characterised in that** the introduction and positioning of the watertightness means (8) in the interior of the pipe (1) in the desired sealing position (9) is carried out by introducing a stud in the interior of the pipe (1) through one of its ends (2,3), which reaches the desired sealing position (9) and remains fixed thereto, and by introducing an additional stud in the interior of the pipe (1) through its other end (3,2), which pushes said watertightness means (8) to the desired sealing position (9), whereupon they are positioned and fixed between the two studs.

4. A method for manufacturing watertight metallic pipes, according to any of the preceding clams, **characterised in that** the pipe (1) is made to rotate by means of the rotor (5) of the grooving machine (4) at a speed comprised between 192 rpm and 1400 rpm.

5. A method for manufacturing watertight metallic pipes, according to any of the preceding clams, **characterised in that** the grooving machine (4) comprises a speed variator.

6. A watertight metallic pipe obtainable by the method described in any of claims 1 to 5, comprising a cylindrical metallic pipe (1) and revolving watertightness means (8), **characterized in that** the watertightness means (8) comprise a cylindrical bushing with a recess in its central area, wherein at least one O-ring (11) is disposed, and the pipe (1) comprises a groove (10) on its outer surface that reduces its diameter in a sealing position (9) which corresponds with the position of the recess of the cylindrical bushing, said watertightness means (8) being fixed to the inner surface of the pipe (1) by means of pressure, whereupon it is sealed in a watertight manner.

7. A watertight metallic pipe, according to claim 6, **characterized in that** the bushing comprises two O-rings (11) disposed in contact with each other.

## Patentansprüche

1. Eine Methode zur Herstellung von wasserdichten Metallrohren, **dadurch gekennzeichnet, dass** diese Folgendes umfasst:
- die Platzierung eines zylinderförmigen Metallrohrs (1) in einer Rohrnutmaschine (4);
- die Positionierung eines ersten Endes (2) des Rohrs (1) auf einem Rotor (5) der Nutmaschine (4), der das besagte Rohr (1) zum Drehen bringt;
- die Positionierung eines zweiten Endes (3) des Rohrs (1) in einem Stützsystem (6) der Nutmaschine (4), welches das besagte zweite Ende (3) stützt, sodass eine Rotation des Rohrs (1) erlaubt wird; und
- die Positionierung eines rotierenden Nutwerkzeugs (7) in einer gewünschten abdichtenden Position (9) an der Außenseite eines Zwischenbereichs des Rohrs (1) zwischen dem ersten (2) und zweiten Ende (3) desselben, welche durch die folgenden Phasen gekennzeichnet ist:
- die Einführung und Positionierung sich drehender Wasserdichtheitsmittel (8), die eine zylinderförmige Hülse mit einer Vertiefung in ihrem mittleren Bereich umfassen, wobei mindestens ein O-Ring (11) in der gewünschten abdichtenden Position (9) des Zwischenbereichs des Rohrs (1) im Inneren des Rohrs (1) angeordnet wird;
- die Betätigung des Rotors (5) der Nutmaschine (4), der das Rohr (1) zum Drehen bringt, und
- die Betätigung des Nutwerkzeugs (7) gegen die Außenseite des Rohrs (1), wobei durch dessen Drehbewegung und den gegen die besagte Außenseite ausgeübten Druck und die Drehung des Rohrs (1) eine Nut (10) durchgeführt wird, die den Durchmesser des Rohrs (1) in der abdichtenden Position (9) reduziert, die mit der Stelle übereinstimmt, an der sich die Vertiefung der zylinderförmigen Hülse befindet, wobei die besagten Wasserdichtheitsmittel (8) durch Druck an der Innenseite des Rohrs (1) fixiert werden, wodurch das besagte Rohr (1) auf wasserdichte Weise abgedichtet wird.

2. Eine Methode zur Herstellung von wasserdichten Metallrohren nach Anspruch 1, **dadurch gekennzeichnet, dass** die Einführung und Positionierung der Wasserdichtheitsmittel (8) in das Innere des Rohrs (1) in der gewünschten abdichtenden Position (9) durch die Einführung von mindestens einem Bolzen in das Innere des Rohrs (1) durch eines der Enden (2, 3) durchgeführt wird, der die besagten Wasserdichtheitsmittel (8) an die gewünschte abdichtende Position (9) drückt.

3. Eine Methode zur Herstellung von wasserdichten Metallrohren nach dem vorstehenden Anspruch, **dadurch gekennzeichnet, dass** die Einführung und Positionierung der Wasserdichtheitsmittel (8) in das Innere des Rohrs (1) in der gewünschten abdichtenden Position (9) durch die Einführung von einem Bolzen in das Innere des Rohrs (1) durch eines der Enden (2, 3) durchgeführt wird, der die gewünschte abdichtende Position (9) erreicht und an dieser fixiert bleibt, und durch die Einführung eines zusätzlichen Bolzens in das Innere des Rohrs (1) durch dessen anderes Ende (3, 2), der die besagten Wasserdichtheitsmittel (8) an die gewünschte abdichtende Position (9) drückt, wodurch diese zwischen den beiden Bolzen positioniert und fixiert werden.

4. Eine Methode zur Herstellung von wasserdichten Metallrohren nach einem der vorstehenden Ansprüche, **dadurch gekennzeichnet, dass** das Rohr (1) von dem Rotor (5) der Nutmaschine (4) mit einer Drehzahl zwischen 192 U/min und 1400 U/min zum Drehen gebracht wird.

5. Eine Methode zur Herstellung von wasserdichten Metallrohren nach einem der vorstehenden Ansprüche, **dadurch gekennzeichnet, dass** die Nutmaschine (4) einen Drehzahlregler umfasst.

6. Ein wasserdichtes Metallrohr, das mittels der in einem der Ansprüche 1 bis 5 beschriebenen Methode erhalten wird und Folgendes umfasst:
- ein zylinderförmiges Metallrohr (1) und
- sich drehende Wasserdichtheitsmittel (8), **dadurch gekennzeichnet, dass**
- die Wasserdichtheitsmittel (8) eine zylinderförmige Hülse mit einer Vertiefung in ihrem mittleren Bereich umfassen, in der mindestens ein O-Ring (11) angeordnet ist, und das Rohr (1) eine Nut (10) an seiner Außenseite umfasst, die dessen Durchmesser in einer abdichtenden Position (9) reduziert, die mit der Position der Vertiefung der zylinderförmigen Hülse übereinstimmt, wobei die besagten Wasserdichtheitsmittel (8) durch Druck an der Innenseite des Rohrs (1) fixiert werden, wodurch dieses auf wasserdichte Weise abgedichtet wird.

7. Ein wasserdichtes Metallrohr nach Anspruch 6, **dadurch gekennzeichnet, dass** die Hülse zwei O-Ringe (11) umfasst, die in Kontakt miteinander angeordnet sind.

## Revendications

1. Un procédé pour fabriquer des tuyaux métalliques étanches à l'eau, **caractérisé en ce qu'**il comprend les étapes consistant à :
- placer un tuyau métallique cylindrique (1) dans une machine à rainurer les tuyaux (4) ;
- positionner une première extrémité (2) du tuyau (1) sur un rotor (5) de la machine à rainurer (4), qui fait tourner ledit tuyau (1) ;
- positionner une seconde extrémité (3) du tuyau (1) dans un système de support (6) de la machine à rainurer (4), qui soutient ladite seconde extrémité (3), permettant ainsi au tuyau (1) de tourner, et
- positionner un outil à rainurer rotatif (7) à un emplacement de scellage (9) désiré à l'extérieur d'une zone intermédiaire du tuyau (1) entre sa première extrémité (2) et sa seconde extrémité (3), **caractérisé par** les étapes consistant à :
- introduire et positionner des moyens d'étanchéité à l'eau rotatifs (8) comprenant une bague cylindrique avec un chambrage dans sa zone centrale, dans laquelle au moins un joint torique (11) est disposé, à l'intérieur du tuyau (1) à l'emplacement de scellage (9) désiré de la zone intermédiaire du tuyau (1),
- actionner le rotor (5) de la machine à rainurer (4) qui fait tourner le tuyau (1), et
- actionner l'outil à rainurer (7) contre la surface externe du tuyau (1) qui, au moyen de son mouvement de rotatif et de la pression exercée contre ladite surface externe et de la rotation du tuyau (1), fait une rainure (10) qui réduit le diamètre du tuyau (1) à l'emplacement de scellage (9) qui correspond à la place où le chambrage de la bague cylindrique est situé, lesdits moyens d'étanchéité à l'eau (8) étant fixés à la surface interne du tuyau (1) par pression, après quoi ledit tuyau (1) est scellé de façon étanche à l'eau.

2. Un procédé pour fabriquer des tuyaux métalliques étanches à l'eau, selon la revendication 1, **caractérisé en ce que** l'introduction et le positionnement des moyens d'étanchéité à l'eau (8) à l'intérieur du tuyau (1) à l'emplacement de scellage (9) désiré s'effectue en introduisant au moins un goujon à l'intérieur du tuyau (1) dans l'une de ses extrémités (2, 3), qui pousse lesdits moyens d'étanchéité à l'eau (8) jusqu'à l'emplacement de scellage (9) désiré.

3. Un procédé pour fabriquer des tuyaux métalliques étanches à l'eau, selon la revendication précédente, **caractérisé en ce que** l'introduction et le positionnement des moyens d'étanchéité à l'eau (8) à l'intérieur du tuyau (1) à l'emplacement de scellage (9) désiré s'effectue en introduisant un goujon à l'intérieur du tuyau (1) à travers l'une de ses extrémités (2, 3), qui atteint l'emplacement de scellage (9) désiré et y reste fixé, et en introduisant un goujon supplémentaire à l'intérieur du tuyau (1) à travers son autre extrémité (3, 2), qui pousse lesdits moyens d'étanchéité à l'eau (8) jusqu'à l'emplacement de scellage (9) désiré, après quoi ils sont positionnés et fixés entre les deux goujons.

4. Un procédé pour fabriquer des tuyaux métalliques étanches à l'eau, selon n'importe laquelle des revendications précédentes, **caractérisé en ce que** le tuyau (1) est fait pour tourner au moyen d'un rotor (5) de la machine à rainurer (4) à une vitesse comprise entre 192 t/mn et 1 400 t/mn.

5. Un procédé pour fabriquer des tuyaux métalliques étanches à l'eau, selon n'importe laquelle des revendications précédentes, **caractérisé en ce que** la machine à rainurer (4) comprend un variateur de vitesse.

6. Un tuyau métallique étanche à l'eau pouvant être obtenu selon le procédé décrit dans n'importe laquelle des revendications 1 à 5, comprenant : un tuyau métallique cylindrique (1) et des moyens d'étanchéité à l'eau rotatifs (8), **caractérisé en ce que** les moyens d'étanchéité à l'eau (8) comprennent une bague cylindrique avec un chambrage dans sa zone centrale, dans laquelle au moins un joint torique (11) est disposé, et le tuyau (1) comprend une rainure (10) sur sa surface externe qui réduit son diamètre à l'emplacement de scellage (9) qui correspond à l'emplacement du chambrage de la bague cylindrique, lesdits moyens d'étanchéité à l'eau (8) étant fixés à la surface interne du tuyau (1) par pression, après quoi il est scellé de façon étanche à l'eau.

7. Un tuyau métallique étanche à l'eau, selon la revendication 6, **caractérisé en ce que** la bague comprend deux joints toriques (11) placés en contact l'un avec l'autre.
